# EUROPÄISCHE PATENTSCHRIFT

(11) **EP 3 771 890 B1**
(45) Veröffentlichungstag und Bekanntmachung des Hinweises auf die Patenterteilung: **01.06.2022**
(21) Anmeldenummer: 19189131.6
(22) Anmeldetag: 30.07.2019
(51) Int. Cl.: G01D 4/00

(54) **VERFAHREN UND ANORDNUNG ZUM GESICHERTEN ERFASSEN VON ANZEIGEDATEN**
METHOD AND ARRANGEMENT FOR SECURELY DETECTING DISPLAY DATA
PROCÉDÉ ET DISPOSITIF DE DÉTECTION SÉCURISÉE DE DONNÉES D'AFFICHAGE

(43) Veröffentlichungstag der Anmeldung: 03.02.2021
(73) Patentinhaber: Siemens Aktiengesellschaft, 80333 München (DE)
(72) Erfinder: Mayer, Hermann Georg, 83209 Prien am Chiemsee (DE)

(56) Entgegenhaltungen:
- DE-A1- 10 140 792
- DE-A1-102010 014 253
- US-A1- 2017 234 709

## Beschreibung

Mit Hilfe von intelligenten Zählern, sogenannten Smart-Metern, lassen sich Verbrauchszähler, wie z.B. Stromzähler, Gaszähler, Wärmezähler oder Wasserzähler eines Haushalts oder anderer Verbraucher per Datenfernverbindung ablesen. In solchen Fällen ist es nicht mehr erforderlich, dass ein Servicemitarbeiter vor Ort den betreffenden Verbrauchszähler kontrolliert. Zur flächendeckenden Fernablesung von Verbrauchszählern ist es allerdings in der Regel erforderlich, eine sehr große Anzahl von Bestandszählern durch derartige intelligente Zähler zu ersetzen. Je nach Art und Installationsort eines jeweiligen Bestandszählers kann dies mit hohem Aufwand verbunden sein, so dass eine Nachrüstung oft nicht rentabel ist.

Darüber hinaus bestehen gegen eine Installation von fernauslesbaren intelligenten Zählern vielerorts Bedenken hinsichtlich Datenintegrität und Datenschutz. Zum Beispiel ist es in der Regel für einen Verbraucher nicht ersichtlich, welche Daten durch seinen intelligenten Zähler tatsächlich übermittelt werden.

Unter Vermeidung einer aufwendigen Neuausstattung mit intelligenten Zählern sind einige Betreiber von Versorgungsnetzen inzwischen dazu übergegangen, Bestandszähler von den Verbrauchern bzw. Kunden selbst ablesen zu lassen, um die abgelesenen Daten dann elektronisch an den Betreiber zu übermitteln. Dabei können allerdings ungewollte Fehler beim Ablesen oder Übermitteln auftreten oder auch bewusste Manipulationen. Eine alternative Lösung besteht in einer Nachrüstung von Bestandszählern mit einer Kamera und einer maschinellen Schrifterkennung.

Den bekannten Lösungen ist jedoch gemein, dass sie in der Regel nur unzureichenden Datenschutz und/oder unzureichende Datenintegrität gewährleisten. Zudem ist bei einigen bekannten Lösungen eine zusätzliche Infrastruktur zur Datenübermittlung erforderlich.

DE10140792 offenbart eine Vorrichtung zum selbsttätigen Erfassen des Zählerstandes eines Verbrauchszählers.

Es ist Aufgabe der vorliegenden Erfindung, ein Verfahren und eine Anordnung zum gesicherten Erfassen von optisch angezeigten Anzeigedaten anzugeben, die einen besseren Datenschutz und/oder eine bessere Datenintegrität gewährleisten.

Gelöst wird diese Aufgabe durch ein Verfahren mit den Merkmalen des Patentanspruchs 1, durch eine Anordnung mit den Merkmalen des Patentanspruchs 9 sowie durch ein Computerprogrammprodukt mit den Merkmalen des Patentanspruchs 15.

Gemäß einem ersten Aspekt der Erfindung ist ein Verfahren zum gesicherten Erfassen von optisch angezeigten Anzeigedaten eines Anzeigegeräts vorgesehen. Hierbei werden die Anzeigedaten sowie individuelle optische Merkmale des Anzeigegeräts durch eine Erfassungseinrichtung erfasst. Abhängig von den erfassten optischen Merkmalen werden Schlüsseldaten generiert, anhand der die erfassten Anzeigedaten zu einer Nachricht verschlüsselt werden. Die verschlüsselte Nachricht wird dann ausgegeben.

Gemäß einem weiteren Aspekt der Erfindung ist eine Anordnung zum gesicherten Erfassen von optisch angezeigten Anzeigedaten eines Anzeigegeräts vorgesehen. Die Anordnung verfügt über eine Erfassungseinrichtung zum Erfassen der Anzeigedaten und zum Erfassen individueller optischer Merkmale des Anzeigegeräts. Weiterhin weist die Anordnung einen Kodegenerator auf zum Generieren von Schlüsseldaten abhängig von den erfassten optischen Merkmalen. Darüber hinaus verfügt die Anordnung über eine Verschlüsselungseinrichtung zum Verschlüsseln der erfassten Anzeigedaten zu einer Nachricht anhand der generierten Schlüsseldaten sowie über eine Ausgabeschnittstelle zum Ausgeben der Nachricht.

Als individuelle optische Merkmale können insbesondere zufallsbasiert entstandene und zufallsverteilte Merkmale des Anzeigegeräts, wie Frässpuren oder Schleifspuren, Maserungen etc. genutzt werden. Diese sind in vielen Fälle nur schwer reproduzierbar oder fälschbar und lassen sich damit zur Überprüfung einer Authentizität des Anzeigegeräts verwenden.

Ein wesentlicher Vorteil der Erfindung ist darin zu sehen, dass ein besserer Datenschutz und/oder eine bessere Datenintegrität ohne größere Änderungen an bestehenden Anzeigegeräten erzielt werden kann.

Vorteilhafte Ausführungsformen und Weiterbildungen der Erfindung sind in den abhängigen Ansprüchen angegeben.

Besondere Ausführungsformen der Erfindung können Anzeigedaten von einem Stromzähler, von einem Gaszähler, von einem Wasserzähler, von einem Wärmezähler oder von einem anderen Verbrauchszähler oder von einer anderen Messeinrichtung als Anzeigegerät erfassen. Als Anzeigedaten können dann Zählerstände oder Messdaten erfasst werden.

Gemäß einer vorteilhaften Ausführungsform der Erfindung können in einer Initialisierungsphase die Schlüsseldaten gesichert an einen Betreiber des Anzeigegeräts übermittelt werden. In einem Regelbetrieb kann dann die Nachricht zum Betreiber übermittelt und dort anhand der übermittelten Schlüsseldaten entschlüsselt werden. Insbesondere kann ein Verbraucher oder Benutzer des Anzeigegeräts die verschlüsselte Nachricht selbst ablesen oder abscannen und zum Betreiber unter Wahrung von Datenintegrität und/oder Datenschutz übermitteln.

Weiterhin kann durch die Erfassungseinrichtung ein Bild des Anzeigegeräts oder eines Teils davon aufgenommen werden, woraus ein die Anzeigedaten enthaltender Bildbereich selektiert werden kann. Die Anzeigedaten können dann aus dem selektierten Bildbereich extrahiert werden. Weiterhin kann der selektierte Bildbereich aus dem Bild ausgeblendet oder ausmaskiert werden. Aus dem verbleibenden Bild können dann die individuellen optischen Merkmale extrahiert werden. Hierbei können insbesondere diejenigen Teile des aufgenommenen Bildes ausgeblendet oder ausmaskiert werden, die sich bei einer Änderung der Anzeigedaten ändern. Hierdurch kann erreicht werden, dass das verbleibende Bild die individuellen optischen Merkmale statisch wiedergibt, wodurch eine Auswertung erleichtert wird. Sowohl bei der Selektion des Bildbereichs als auch bei der Extraktion der Anzeigedaten und der individuellen optischen Merkmale kann auf eine Vielzahl von bekannten Verfahren zur Mustererkennung oder Zahlenerkennung zurückgegriffen werden.

Nach einer vorteilhaften Ausführungsform der Erfindung kann die Verschlüsselung derart erfolgen, dass die Nachricht keine größere Datenmenge, keine größere Zeichenanzahl oder keinen größeren Informationsgehalt umfasst als die unverschlüsselten Anzeigedaten. Insbesondere kann vorgesehen sein, dass die Nachricht eine gleiche Datenmenge, eine gleiche Zeichenanzahl oder einen gleichen Informationsgehalt aufweist wie die unverschlüsselten Anzeigedaten. In diesem Fall kann ein Verbraucher oder Benutzer des Anzeigegeräts darauf vertrauen, dass keine weiteren Daten außer den Anzeigedaten erfasst werden.

Vorzugsweise kann die Verschlüsselung der erfassten Anzeigedaten durch Einmalverschlüsselung mit einem aus den Schlüsseldaten extrahierten Schlüssel erfolgen. Eine solche Einmalverschlüsselung wird häufig auch als Einmalschlüssel-Verfahren oder One-Time-Pad-Verfahren bezeichnet. Bei derartigen Verschlüsselungsverfahren wird zur Verschlüsselung eines Datensatzes ein Schlüssel verwendet, der mindestens so lang ist wie der zu verschlüsselnde Datensatz.

Darüber hinaus kann eine Zeitangabe, beispielsweise ein Zeitstempel, ein Kalenderdatum oder eine Kalenderwoche erfasst werden. Ein zur Verschlüsselung zu verwendender Schlüssel kann dann abhängig von der Zeitangabe aus den Schlüsseldaten extrahiert werden. Auf diese Weise kann die Datensicherheit erhöht werden, wobei insbesondere Erfassungszeiten von Ablesedaten verifiziert werden können.

Nach einer vorteilhaften Ausführungsform der Erfindung kann die erfindungsgemäße Anordnung als Aufsatz zum individuell positionierbaren Befestigen, vorzugsweise zum Aufkleben der Anordnung am Anzeigegerät ausgestaltet sein. Durch eine individuelle, nicht ohne Weiteres reproduzierbare Montageposition kann eine Manipulationssicherheit wesentlich erhöht werden, da auch bei leicht unterschiedlichen Montagepositionen verschiedene individuelle Merkmale des Anzeigegeräts in unterschiedlicher Weise erfasst werden. Dies führt in der Regel zur Generierung unterschiedlicher Schlüsseldaten und kann hierdurch erkannt werden.

Ein Ausführungsbeispiel der Erfindung wird nachfolgend anhand der Zeichnung näher erläutert. Dabei zeigen jeweils in schematischer Darstellung:
- Figur 1: ein Anzeigegerät mit individuellen optischen Merkmalen,
- Figur 2: eine erfindungsgemäße Anordnung als Aufsatz für das Anzeigegerät und
- Figur 3: das Anzeigegerät mit aufgesetztem Aufsatz in verschiedenen Betriebsphasen.

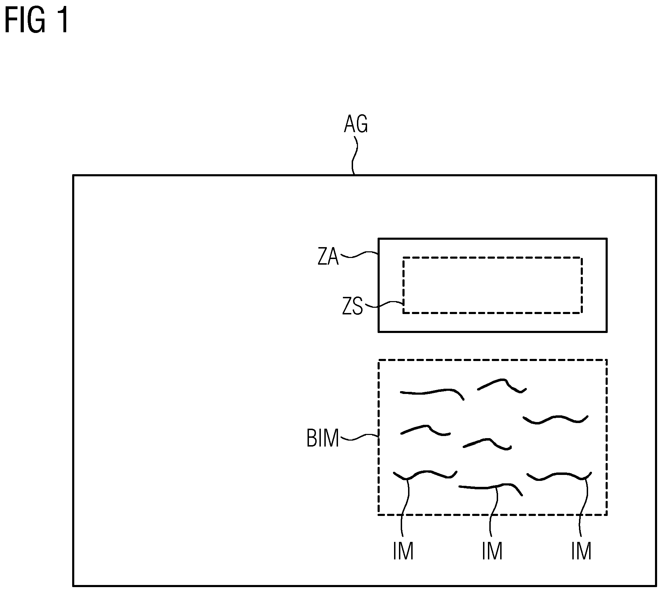

Figur 1 zeigt ein Anzeigegerät AG, z.B. einen Stromzähler, einen Gaszähler, einen Wasserzähler, einen Wärmezähler oder einen anderen Verbrauchszähler oder eine andere Messeinrichtung in schematischer Darstellung. Im vorliegenden Ausführungsbeispiel wird als Anzeigegerät AG ein Stromzähler betrachtet.

Der Stromzähler AG verfügt über eine Ziffernanzeige ZA zur optischen Anzeige von Anzeigedaten ZS. Im vorliegenden Ausführungsbeispiel sind die Anzeigedaten ZS ein Zählerstand, der einen akkumulierten Stromverbrauch eines Verbrauchers angibt.

Der Stromzähler AG oder dessen Oberfläche weist weiterhin einen oder mehrere Bereiche BIM auf, die eine Vielzahl von individuellen optischen Merkmalen IM des Stromzählers AG enthalten. Die individuellen optischen Merkmale IM können insbesondere durch eine Maserung, eine Porung, ein Legierungsgefüge, Frässpuren, Schleifspuren, Kratzer und/oder andere Fertigungsspuren oder Gebrauchsspuren des Stromzählers AG gebildet werden. Darüber hinaus können als individuelle optische Merkmale IM Spiegelungen oder Reflexe an Teilen des Stromzählers AG, individuelle Bildmerkmale eines Bildes des Stromzählers AG, eine Position von Ziffern der Ziffernanzeige ZA, individuell angebrachte Markierungen und/oder andere nicht ohne Weiteres reproduzierbare Merkmale des Stromzählers AG genutzt werden. Derartige individuelle optische Merkmale IM sind in der Regel zufallsbasiert entstanden und zufallsverteilt und damit nicht oder nur unter großem Aufwand reproduzierbar, kopierbar und/oder memorierbar. Die individuellen optischen Merkmale IM haben somit gewissermaßen die Eigenschaften eines Fingerabdrucks und sind charakteristisch für einen individuellen Stromzähler AG.

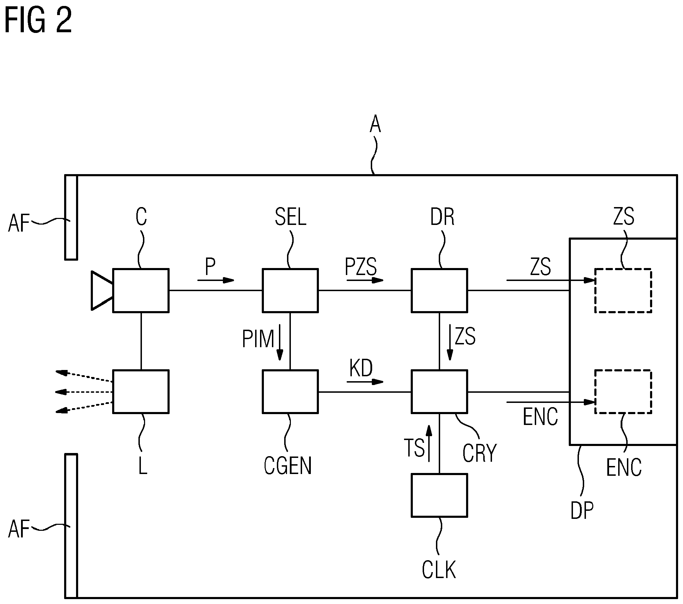

Figur 2 zeigt in schematischer Darstellung eine erfindungsgemäße Anordnung A, die als Aufsatz für das Anzeigegerät AG ausgebildet ist. Insofern in Figur 2 die gleichen oder korrespondierende Bezugszeichen verwendet werden wie in Figur 1, werden hierdurch die gleichen oder korrespondierende Entitäten bezeichnet, die vorzugsweise wie oben beschrieben, implementiert oder realisiert sind.

Der Aufsatz A ist derart ausgestaltet, dass er in individuell positionierbarer Weise am Stromzähler AG befestigt werden kann. Zu diesem Zweck wird eine Auflagefläche AF des Aufsatzes A auf den Stromzähler AG an einer individuell wählbaren Position derart aufgesetzt, dass sich die Ziffernanzeige ZA und ein Bereich BIM mit individuellen optischen Merkmalen IM des Stromzählers AG im Erfassungsbereich einer Kamera C des Aufsatzes A befindet. In dieser Position wird der Aufsatz A am Stromzähler AG befestigt, vorzugsweise aufgeklebt.

Die Kamera C ist Teil einer Erfassungseinrichtung des Aufsatzes A zum optischen Erfassen sowohl des Zählerstandes ZS als auch der individuellen optischen Merkmale IM. Diese Erfassungseinrichtung umfasst weiterhin eine mit der Kamera C gekoppelte Beleuchtungseinrichtung L zum Beleuchten des Stromzählers AG bei Bildaufnahmen. Die Beleuchtungseinrichtung L ist vorzugsweise als Kameralicht oder Kamerablitz ausgestaltet. Sie sorgt für reproduzierbare Beleuchtungsverhältnisse und erleichtert somit eine reproduzierbare Erfassung, insbesondere der individuellen optischen Merkmale IM. Die Kamera C und die Beleuchtungseinrichtung L sind am oder im Aufsatz A derart angeordnet, dass sie nach Befestigung des Aufsatzes A auf dem Stromzähler AG auf die Ziffernanzeige ZA und den Bereich BIM ausgerichtet sind. Die Auflagefläche AF lässt für die Kamera C und die Beleuchtungseinrichtung L ein Sichtfenster bzw. ein Beleuchtungsfenster frei. Das Sichtfenster bzw. Beleuchtungsfenster kann in der Auflagefläche AF ausgespart oder zumindest transparent ausgeführt sein.

Durch die individuelle Befestigungsposition des Aufsatzes A hängen der Bereich BIM und damit eine optische Erfassung der individuellen optischen Merkmale IM in nicht oder nur sehr schwer reproduzierbarer Weise von einer individuellen Befestigungsposition des Aufsatzes A oder der Erfassungseinrichtung in Bezug auf den Stromzähler AG ab. Durch die Befestigung bzw. das Aufkleben des Aufsatzes A wird die relative Position zwischen der Erfassungseinrichtung einerseits und der Ziffernanzeige ZA und des Bereiches BIM andererseits fixiert, so dass danach die individuellen optischen Merkmale IM in reproduzierbarer Weise erfasst werden können.

Der Aufsatz A verfügt weiterhin über ein Display DP als Ausgabeschnittstelle. Das Display DP ist vorzugsweise an einer Oberseite, Rückseite und/oder an einer der Kamera C abgewandten Seite des Aufsatzes A angeordnet. Das Display DP weist vorzugsweise zwei Anzeigebereiche oder Teildisplays auf.

Nach der Fixierung des Aufsatzes A auf dem Stromzähler AG kann die Kamera C ein Bild P des Stromzählers AG oder eines Teils davon aufnehmen, das die Ziffernanzeige ZA sowie einen Bereich BIM mit individuellen optischen Merkmalen IM des Stromzählers AG enthält. Das Bild P wird von der Kamera C zu einer mit dieser gekoppelten Bildselektionseinrichtung SEL des Aufsatzes A übermittelt.

Die Bildselektionseinrichtung SEL selektiert einen die Ziffernanzeige ZA und insbesondere den Zählerstand ZS enthaltenden Bildbereich PZS aus dem Bild P. Der selektierte Bildbereich PZS wird durch die Bildselektionseinrichtung SEL zu einer Ziffernerkennung DR des Aufsatzes A übermittelt. Die Ziffernerkennung DR ist mit der Bildselektionseinrichtung SEL und dem Display DP gekoppelt und implementiert ein Mustererkennungsverfahren oder ein anderes Bildverarbeitungsverfahren zur Erkennung von Ziffern. Zu diesem Zweck steht eine Vielzahl von Erkennungsverfahren zur Verfügung. Die Ziffernerkennung DR erkennt, digitalisiert und/oder extrahiert den Zählerstand ZS aus dem Bildbereich PZS. Der extrahierte Zählerstand ZS wird von der Ziffernerkennung DR zum Display DP übermittelt und dort in einem ersten Anzeigebereich oder Teildisplay angezeigt.

Weiterhin blendet oder maskiert die Bildselektionseinrichtung SEL den Bildbereich PZS aus dem Bild P aus und/oder separiert auf andere Weise einen den Bereich BIM umfassenden Bildbereich PIM zumindest von denjenigen Teilen des Bildbereichs PZS, die sich aufgrund von Ziffernwechseln ändern können. Der separierte oder verbleibende Bildbereich PIM enthält insbesondere eine Abbildung der individuellen optischen Merkmale IM und hängt in charakteristischerweise von diesen individuellen optischen Merkmalen IM und der individuellen Befestigungsposition des Aufsatzes A am Stromzähler AG ab. Damit ist diese Abbildung der individuellen optischen Merkmale IM bzw. der Bildbereich PIM selbst ein individuelles optisches Merkmal und charakteristisch sowohl für den Stromzähler AG als auch für die individuelle Befestigung des Aufsatzes A am Stromzähler AG. Als derartiges charakteristisches Merkmal ist der Bildbereich PIM nicht ohne weiteres reproduzierbar oder fälschbar. Somit kann eine Manipulation am Stromzähler AG oder am Aufsatz A in der Regel sehr leicht an einer Änderung des Bildbereichs PIM erkannt werden.

Die Bildselektionseinrichtung SEL übermittelt den Bildbereich PIM zu einem mit der Bildselektionseinrichtung SEL gekoppelten Codegenerator CGEN des Aufsatzes A. Der Codegenerator CGEN dient zum Generieren von Schlüsseldaten KD abhängig von den erfassten individuellen Merkmalen IM des Stromzählers AG. Insofern der Bildbereich PIM in nicht ohne Weiteres reproduzierbarer Weise von den individuellen optischen Merkmalen IM und der Befestigung des Aufsatzes A am Stromzähler AG abhängig ist, kann der Bildbereich PIM direkt als Basis für eine individuelle, nicht ohne Weiteres reproduzierbare Generierung der Schlüsseldaten KD dienen. Die Schlüsseldaten KD können beispielsweise aus den den Bildbereich PIM codierenden Daten gewonnen werden. Diese Daten können auch dazu verwendet werden, einen Zufallszahlengenerator zu initialisieren oder in nicht ohne Weiteres reproduzierbarer Weise zu beeinflussen.

Die generierten Schlüsseldaten KD werden vom Codegenerator CGEN zu einer Verschlüsselungseinrichtung CRY des Aufsatzes A übermittelt. Weiterhin werden ein jeweiliger Zählerstand ZS von der Ziffernerkennung DR sowie eine Zeitangabe TS von einer Uhr CLK zur Verschlüsselungseinrichtung CRY übermittelt. Die Zeitangabe TS kann beispielsweise einen Zeitstempel umfassen und/oder ein Kalenderdatum oder eine Kalenderwoche angeben.

Die Verschlüsselungseinrichtung CRY ist mit dem Codegenerator CGEN, der Ziffernerkennung DR, der Uhr CLK sowie mit dem Display DP gekoppelt und dient zum Verschlüsseln des erfassten Zählerstandes ZS zu einer verschlüsselten Nachricht ENC anhand der generierten Schlüsseldaten KD und der Zeitangabe TS.

Zur Verschlüsselung werden aus den Schlüsseldaten KD eine Vielzahl von jeweils für eine Einmalverschlüsselung geeigneten Schlüsseln extrahiert. Eine derartige Einmalverschlüsselung wird häufig auch als Einmalschlüssel-Verfahren oder One-Time-Pad-Verfahren bezeichnet. Bei derartigen Verschlüsselungsverfahren wird zur Verschlüsselung eines Datensatzes jeweils ein Schlüssel verwendet, der mindestens so lang ist, wie der Datensatz selbst. Dementsprechend werden im vorliegenden Ausführungsbeispiel zur Einmalverschlüsselung aus den Schlüsseldaten KD Schlüssel extrahiert, die jeweils mindestens so lang sind, wie ein hiermit zu verschlüsselnder Zählerstand ZS. Insofern ein solcher Schlüssel nur einmal zu verwenden ist, sollten die aus dem Bildbereich PIM abgeleiteten Schlüsseldaten KD umfangreich genug sein, um daraus genügend viele zur Einmalverschlüsselung geeignete und voneinander unabhängige Schlüssel zu extrahieren.

Im vorliegenden Ausführungsbeispiel werden die Schlüssel jeweils abhängig von der Zeitangabe TS aus den Schlüsseldaten KD extrahiert. Hierzu kann ein jeweiliger Schlüssel z.B. abhängig von einer jeweiligen Zeitangabe TS aus den Schlüsseldaten KD selektiert werden, und/oder die Schlüsseldaten KD können mit einer jeweiligen Zeitangabe TS verknüpft werden. Wenn die Zeitangabe TS eine jeweilige Kalenderwoche angibt, kann auf diese Weise nach jeder Kalenderwoche ein Wechsel des Schlüssels induziert werden.

Die Verschlüsselung eines jeweiligen Zählerstandes ZS mit einem jeweiligen aus den Schlüsseldaten KD extrahierten Schlüssel wird durch die Verschlüsselungseinrichtung CRY vorzugsweise derart ausgeführt, dass die so verschlüsselte Nachricht ENC keine größere Zeichenanzahl, keine größere Datenmenge und/oder keinen größeren Informationsgehalt aufweist, als der unverschlüsselte Zählerstand ZS. Vorzugsweise wird so verschlüsselt, dass die verschlüsselte Nachricht ENC die gleiche Zeichenanzahl oder Stellenanzahl aufweist, wie der unverschlüsselte Zählerstand ZS. Dies kann z.B. durch eine Exklusiv-Oder-Verknüpfung des Zählerstandes ZS mit einem jeweiligen Schlüssel erreicht werden.

Die verschlüsselte Nachricht ENC wird von der Verschlüsselungseinrichtung CRY zum Display DP übertragen und dort in einem zweiten Anzeigebereich oder Teildisplay angezeigt. Die verschlüsselte Nachricht ENC kann hierbei als Zeichenkette oder z.B. als QR-Code, Barcode oder in anderer maschinenlesbarer Form angezeigt werden.

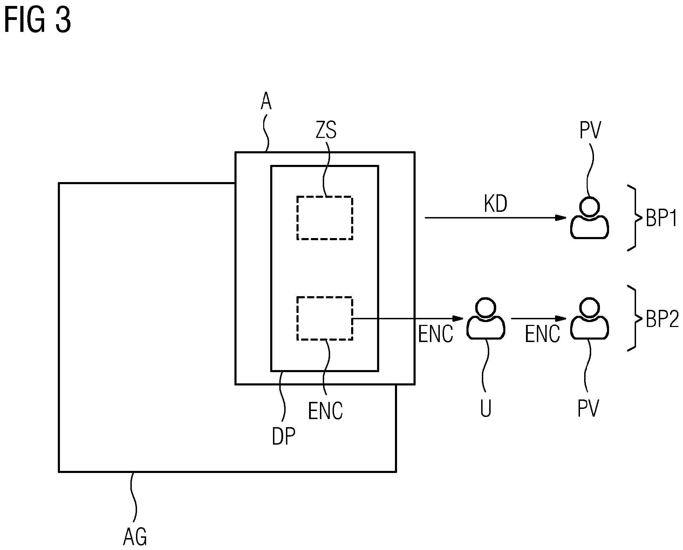

Figur 3 zeigt in schematischer Darstellung das Anzeigegerät AG mit aufgesetztem Aufsatz A in verschiedenen Betriebsphasen. Insofern in Figur 3 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben, implementiert oder realisiert sind.

Im Rahmen einer Inbetriebnahme der erfindungsgemäßen Anordnung A wird diese auf dem Stromzähler AG montiert, vorzugsweise aufgeklebt, oder in anderer individueller Weise so am Stromzähler AG befestigt und fixiert, dass sich die Ziffernanzeige ZA und ein Bereich BIM mit individuellen optischen Merkmalen IM des Stromzählers AG im Erfassungsbereich der Kamera C befinden. Wie schon erwähnt, bedingt die individuelle Montageposition auch eine individuelle Kameraposition. Gegebenenfalls können künstliche individuelle Markierungen, insbesondere handschriftliche Zeichen auf den Stromzähler AG in einem Aufnahmebereich der Kamera C angebracht werden. Um zu verhindern, dass bereits bei der Montage des Stromzählers AG eine Manipulation vorgenommen wird, z.B. eine Montage auf einer Stromzählerattrappe, kann die Inbetriebnahme durch einen Mitarbeiter eines Betreibers PV des Stromzählers AG vorgenommen werden.

Nach Montage des Aufsatzes A am Stromzähler AG wird in einer Initialisierungsphase BP1 des Aufsatzes A ein von der Kamera C erstmalig erfasstes Bild P mit individuellen optischen Merkmalen IM, wie oben beschrieben, ausgewertet, um Schlüsseldaten KD zu generieren. Die in der Initialisierungsphase BP1 generierten Schlüsseldaten KD können durch einen Mitarbeiter des Betreibers PV ausgelesen werden und/oder gesichert zu diesem übertragen werden. Würde der Aufsatz A vom Stromzähler AG getrennt und auf einen anderen Zähler, eine Zählerattrappe oder später wieder auf denselben Stromzähler AG aufgesetzt, so werden sich das erfasste Bild mit den individuellen optischen Merkmalen IM und damit auch neu generierte Schlüsseldaten ändern und die Manipulation erkennbar machen.

Nach Abschluss der Initialisierungsphase BP1 wird in einem Regelbetrieb BP2 des Aufsatzes A bei jedem Ablesevorgang des Zählerstandes ZS, wie oben beschrieben, ein Bild der individuellen optischen Merkmale IM des Stromzählers AG durch die Kamera C aufgenommen und abhängig davon die Schlüsseldaten KD generiert. Solange der Aufsatz A nicht manipuliert wurde stimmen die Schlüsseldaten KD mit den an den Betreiber PV übermittelten Schlüsseldaten überein. Weiterhin wird der Zählerstand ZS erkannt und mit Hilfe der generierten Schlüsseldaten KD zu einer Nachricht ENC verschlüsselt. Der auf diese Weise erhaltene Zählerstand ZS wird im Klartext auf dem Display DP zusammen mit der verschlüsselten Nachricht ENC angezeigt. Ein Verbraucher oder Benutzer U des Anzeigegeräts AG kann damit wie gewohnt seinen Zählerstand ZS im Klartext ablesen und sich so über seinen Stromverbrauch informieren.

Darüber hinaus kann der Verbraucher U die verschlüsselte Nachricht ENC ablesen oder falls maschinenlesbar, einscannen und zum Betreiber PV übermitteln. Alternativ oder zusätzlich kann die verschlüsselte Nachricht ENC automatisch an den Betreiber PV übertragen werden. Der Betreiber PV kann die verschlüsselte Nachricht ENC anhand der in der Initialisierungsphase BP1 übermittelten Schlüsseldaten entschlüsseln und so den Zählerstand ZS erfassen. Die Erfindung erlaubt damit den Zählerstand ZS gesichert zum Betreiber PV zu übermitteln.

Da die Schlüsseldaten KD dem Verbraucher U selbst nicht bekannt sind, kann dieser keine gültige verschlüsselte Nachricht mehr erzeugen, sobald sich die Schlüsseldaten KD z.B. infolge einer Manipulation geändert haben. Durch die Einbeziehung von Zeitangaben bei der Verschlüsselung kann zudem effektiv vermieden werden, dass der Verbraucher U frühere und damit zu niedrige Zählerstände an den Betreiber PV übermittelt.

Insofern die verschlüsselte Nachricht ENC die gleiche Ziffernanzahl wie die unverschlüsselten Zählerdaten ZS aufweist, kann der Verbraucher U darauf vertrauen, dass keine weiteren Daten außer dem Zählerstand ZS an den Betreiber PV übermittelt werden, was erheblich zum Datenschutz beiträgt. Die Erfindung erlaub somit auf einfache Weise Anzeigedaten ZS unter Wahrung von Datenintegrität und Datenschutz von einem Anzeigegerät AG zu einem Betreiber PV des Anzeigegeräts AG zu übermitteln.

## Patentansprüche

1. Verfahren zum gesicherten Erfassen von optisch angezeigten Anzeigedaten (ZS) eines Anzeigegeräts (AG), wobei
a) die Anzeigedaten (ZS) sowie individuelle optische Merkmale (IM) des Anzeigegeräts (AG) durch eine Erfassungseinrichtung (C) erfasst werden, wobei als optische Merkmale (IM) auf Fertigungstoleranzen basierende Fertigungsspuren am Anzeigegerät (AG), Frässpuren oder Schleifspuren am Anzeigegerät (AG), Kratzer in einer Abdeckung oder in einer anderen Oberfläche des Anzeigegeräts (AG) oder eine Maserung, eine Porung oder ein Legierungsgefüge des Anzeigegeräts (AG) erfasst werden,
b) abhängig von den erfassten optischen Merkmalen (IM) Schlüsseldaten (KD) generiert werden,
c) die erfassten Anzeigedaten (ZS) anhand der generierten Schlüsseldaten (KD) zu einer Nachricht (ENC) verschlüsselt werden, und
d) die Nachricht (ENC) ausgegeben wird.

2. Verfahren nach Anspruch 1, **dadurch gekennzeichnet, dass** die Anzeigedaten (ZS) von einem Stromzähler, einem Gaszähler, einem Wasserzähler, einem Wärmezähler oder einem anderen Verbrauchszähler oder einer anderen Messeinrichtung als Anzeigegerät (AD) erfasst werden.

3. Verfahren nach einem der vorhergehenden Ansprüche, **dadurch gekennzeichnet,**
**dass** in einer Initialisierungsphase die Schlüsseldaten (KD) gesichert an einen Betreiber (P) des Anzeigegeräts (AD) übermittelt werden, und
**dass** im Regelbetrieb die Nachricht (ENC) zum Betreiber (U) übermittelt und dort anhand der übermittelten Schlüsseldaten (KD) entschlüsselt wird.

4. Verfahren nach einem der vorhergehenden Ansprüche, **dadurch gekennzeichnet, dass**
als individuelle optische Merkmale (IM)
- Spiegelungen an Teilen des Anzeigegeräts (AG),
- individuelle Bildmerkmale eines Bildes (PIM) des Anzeigegeräts (AG),
- eine Bildposition von Teilen des Anzeigegeräts (AG),
- individuell angebrachte Markierungen, und/oder
- andere nicht ohne Weiteres reproduzierbare Merkmale des Anzeigegeräts (AG) erfasst werden.

5. Verfahren nach einem der vorhergehenden Ansprüche, **dadurch gekennzeichnet,**
**dass** durch die Erfassungseinrichtung (C) ein Bild (P) des Anzeigegeräts (AG) oder eines Teils davon aufgenommen wird, dass ein die Anzeigedaten (ZS) enthaltender Bildbereich (PZS) des Bildes (P) selektiert wird,
**dass** die Anzeigedaten (ZS) aus dem selektierten Bildbereich (PZS) extrahiert werden,
**dass** der selektierte Bildbereich (PZS) aus dem Bild (P) ausgeblendet wird, und
**dass** die individuellen optischen Merkmale (IM) aus dem verbleibenden Bild (PIM) extrahiert werden.

6. Verfahren nach einem der vorhergehenden Ansprüche, **dadurch gekennzeichnet,**
**dass** die Verschlüsselung derart erfolgt, dass die Nachricht (ENC) keine größere Datenmenge, keine größere Zeichenanzahl oder keinen größeren Informationsgehalt umfasst als die unverschlüsselten Anzeigedaten (ZS).

7. Verfahren nach einem der vorhergehenden Ansprüche, **dadurch gekennzeichnet,**
**dass** die Verschlüsselung der erfassten Anzeigedaten (ZS) durch Einmalverschlüsselung mit einem aus den Schlüsseldaten (KD) extrahierten Schlüssel erfolgt.

8. Verfahren nach einem der vorhergehenden Ansprüche, **dadurch gekennzeichnet,**
**dass** eine Zeitangabe (TS) erfasst wird, und
**dass** ein zur Verschlüsselung zu verwendender Schlüssel abhängig von der Zeitangabe (TS) aus den Schlüsseldaten (KD) extrahiert wird.

9. Anordnung zum gesicherten Erfassen von optisch angezeigten Anzeigedaten eines Anzeigegeräts, mit
a) einer Erfassungseinrichtung (C) zum Erfassen der Anzeigedaten (ZS) und zum Erfassen individueller optischer Merkmale (IM) des Anzeigegeräts (AG), wobei die optischen Merkmale (IM) auf Fertigungstoleranzen basierende Fertigungsspuren am Anzeigegerät (AG), Frässpuren oder Schleifspuren am Anzeigegerät (AG), Kratzer in einer Abdeckung oder in einer anderen Oberfläche des Anzeigegeräts (AG) oder eine Maserung, eine Porung oder ein Legierungsgefüge des Anzeigegeräts (AG) sind,
b) einem Kodegenerator (CGEN) zum Generieren von Schlüsseldaten (KD) abhängig von den erfassten optischen Merkmalen (IM),
c) eine Verschlüsselungseinrichtung (CRY) zum Verschlüsseln der erfassten Anzeigedaten (ZS) zu einer Nachricht (ENC) anhand der generierten Schlüsseldaten (KD), und
d) einer Ausgabeschnittstelle (DP) zum Ausgeben der Nachricht (ENC).

10. Anordnung nach Anspruch 9, **dadurch gekennzeichnet, dass** die Anordnung als Aufsatz (A) zum individuell positionierbaren Befestigen der Anordnung (A) am Anzeigegerät (AG) ausgestaltet ist.

11. Anordnung nach Anspruch 9 oder 10, **dadurch gekennzeichnet, dass** die Ausgabeschnittstelle (DP) ein Display zum Anzeigen der Nachricht (ENC) umfasst.

12. Anordnung nach einem der Ansprüche 9 bis 11, **dadurch gekennzeichnet, dass**
die Erfassungseinrichtung eine Kamera (C) zum Erfassen der Anzeigedaten (ZS) sowie der individuellen optischen Merkmale (IM) umfasst.

13. Anordnung nach einem der Ansprüche 9 bis 12, **gekennzeichnet durch** eine Beleuchtungseinrichtung (L) zum Beleuchten des Anzeigegeräts (AG).

14. Anordnung nach einem der Ansprüche 9 bis 13 eingerichtet zum Ausführen eines Verfahrens gemäß einem der Ansprüche 1 bis 8.

15. Computerprogrammprodukt, umfassend Befehle, die bewirken, dass eine Anordnung nach Anspruch 9 die Verfahrensschritte nach einem der Ansprüche 1 bis 8 ausführt.

## Claims

1. Method for securely acquiring optically displayed display data (ZS) of a display device (AG), wherein
a) the display data (ZS) and individual optical features (IM) of the display device (AG) are acquired by an acquisition apparatus (C), wherein manufacturing marks on the display device (AG) that are based on manufacturing tolerances, milling marks or grinding marks on the display device (AG), scratches on a cover or on another surface of the display device (AG) or a grain, a pore or an alloy structure of the display device (AG) are acquired as optical features (IM),
b) key data (KD) are generated depending on the acquired optical features (IM),
c) the acquired display data (ZS) are encrypted on the basis of the generated key data (KD) to form a message (ENC), and
d) the message (ENC) is output.

2. Method according to Claim 1, **characterized in that** the display data (ZS) are acquired from an electricity meter, a gas meter, a water meter, a heat meter or another consumption meter or another measuring apparatus as display device (AD).

3. Method according to either of the preceding claims, **characterized in that**,
in an initialization phase, the key data (KD) are transmitted securely to an operator (P) of the display device (AD), and
**in that**, during normal operation, the message (ENC) is transmitted to the operator (U) and is decrypted there on the basis of the transmitted key data (KD).

4. Method according to one of the preceding claims, **characterized in that**
- reflections from parts of the display device (AG),
- individual image features of an image (PIM) of the display device (AG),
- an image position of parts of the display device (AG),
- individually attached markings, and/or
- other features of the display device (AG) that are not readily able to be reproduced
are acquired as individual optical features (IM).

5. Method according to one of the preceding claims, **characterized in that**
an image (P) of the display device (AG) or of part thereof is recorded by the acquisition apparatus (C),
**in that** an image region (PZS), containing the display data (ZS), of the image (P) is selected,
**in that** the display data (ZS) are extracted from the selected image region (PZS),
**in that** the selected image region (PZS) is blended out of the image (P), and
**in that** the individual optical features (IM) are extracted from the remaining image (PIM).

6. Method according to one of the preceding claims, **characterized in that**
the encryption takes place such that the message (ENC) does not comprise any datasets, any number of characters or any information content larger than the unencrypted display data (ZS) .

7. Method according to one of the preceding claims, **characterized in that**
the acquired display data (ZS) are encrypted through one-time encryption using a key extracted from the key data (KD).

8. Method according to one of the preceding claims, **characterized in that**
a time indication (TS) is acquired, and
**in that** a key to be used for the encryption is extracted from the key data (KD) depending on the time indication (TS).

9. Arrangement for securely acquiring optically displayed display data of a display device, having
a) an acquisition apparatus (C) for acquiring the display data (ZS) and for acquiring individual optical features (IM) of the display device (AG), wherein the optical features (IM) are manufacturing marks on the display device (AG) that are based on manufacturing tolerances, milling marks or grinding marks on the display device (AG), scratches on a cover or on another surface of the display device (AG) or a grain, a pore or an alloy structure of the display device (AG),
b) a code generator (CGEN) for generating key data (KD) depending on the acquired optical features (IM),
c) an encryption apparatus (CRY) for encrypting the acquired display data (ZS) on the basis of the generated key data (KD) to form a message (ENC), and
d) an output interface (DP) for outputting the message (ENC).

10. Arrangement according to Claim 9, **characterized in that** the arrangement is in the form of an attachment (A) for fastening the arrangement (A) to the display device (AG) in an individually positionable manner.

11. Arrangement according to Claim 9 or 10, **characterized in that** the output interface (DP) comprises a display for displaying the message (ENC).

12. Arrangement according to one of Claims 9 to 11, **characterized in that**
the acquisition apparatus comprises a camera (C) for acquiring the display data (ZS) and the individual optical features (IM) .

13. Arrangement according to one of Claims 9 to 12, **characterized by** an illumination apparatus (L) for illuminating the display device (AG).

14. Arrangement according to one of Claims 9 to 13, designed to carry out a method according to one of Claims 1 to 8.

15. Computer program product, comprising commands that cause an arrangement according to Claim 9 to carry out the method steps according to one of Claims 1 to 8.

## Revendications

1. Procédé de détection sécurisée de données d'affichage (ZS) d'un appareil d'affichage (AG) affichées optiquement,
a) les données d'affichage (ZS) ainsi que des caractéristiques optiques individuelles (IM) de l'appareil d'affichage (AG) étant détectées par un dispositif de détection (C), en tant que caractéristiques optiques (IM) étant détectées, résultant de tolérances de fabrication, sur l'appareil d'affichage (AG), des traces de fraisage ou des traces de ponçage sur l'appareil d'affichage (AG), des rayures dans un cache ou dans une autre surface de l'appareil d'affichage (AG) ou une texture, une porosité ou une structure d'alliage de l'appareil d'affichage (AG),
b) des données clés (KD) étant générées en fonction des caractéristiques optiques détectées(IM),
c) les données d'affichage détectées (ZS) étant cryptées à l'aide des données clés générées (KD) pour obtenir un message (ENC) et
d) le message (ENC) étant émis.

2. Procédé selon la revendication 1, **caractérisé en ce que** les données d'affichage (ZS) sont détectées par un compteur électrique, un compteur de gaz, un compteur d'eau, un compteur de chaleur ou un autre compteur de consommation ou un autre dispositif de mesure en tant qu'appareil d'affichage (AD).

3. Procédé selon l'une des revendications précédentes, **caractérisé en ce que**, dans une phase d'initialisation, les données clés (KD) sont transférées de manière sécurisée à un opérateur (P) de l'appareil d'affichage (AD) et **en ce que**, en fonctionnement normal, le message (ENC) est transféré à l'opérateur (U) et y est décrypté à l'aide des données clés transférées (KD).

4. Procédé selon l'une des revendications précédentes, **caractérisé en ce que** sont détectés, en tant que caractéristiques optiques individuelles (IM) :
- des réflexions sur des parties de l'appareil d'affichage (AG),
- des caractéristiques d'image individuelles d'une image (PIM) de l'appareil d'affichage (AG),
- une position d'image de parties de l'appareil d'affichage (AG),
- des marquages apposés individuellement et/ou
- d'autres caractéristiques de l'appareil d'affichage (AG) qui ne peuvent pas être reproduites facilement.

5. Procédé selon l'une des revendications précédentes, **caractérisé en ce que**
une image (P) de l'appareil d'affichage (AG) ou d'une partie de celui-ci est prise par le dispositif de détection (C),
une zone d'image (PZS) de l'image (P) contenant les données d'affichage (ZS) est sélectionnée,
les données d'affichage (ZS) sont extraites de la zone d'image sélectionnée (PZS),
la zone d'image sélectionnée (PZS) est cachée de l'image (P) et
les caractéristiques optiques individuelles (IM) sont extraites de l'image restante (PIM).

6. Procédé selon l'une des revendications précédentes, **caractérisé en ce que** le cryptage est effectué de telle sorte que le message (ENC) ne comprend pas de quantité de données, de nombre de caractères ou de contenu d'information plus grands que les données d'affichage non cryptées (ZS).

7. Procédé selon l'une des revendications précédentes, **caractérisé en ce que** le cryptage des données d'affichage détectées (ZS) se fait par cryptage à usage unique avec une clé extraite des données clés (KD).

8. Procédé selon l'une des revendications précédentes, **caractérisé en ce qu'**une indication de temps (TS) est saisie et **en ce qu'**une clé à utiliser pour le cryptage est extraite des données clés (KD) en fonction de l'indication de temps (TS).

9. Ensemble pour la détection sécurisée de données d'affichage d'un appareil d'affichage affichées optiquement, comportant :
a) un dispositif de détection (C) pour détecter les données d'affichage (ZS) et pour détecter des caractéristiques optiques individuelles (IM) de l'appareil d'affichage (AG), les caractéristiques optiques (IM) étant des traces de fabrication sur l'appareil d'affichage (AG), des traces de fraisage ou des traces de ponçage sur l'appareil d'affichage (AG), des rayures dans un cache ou dans une autre surface de l'appareil d'affichage (AG) ou une texture, une porosité ou une structure d'alliage de l'appareil d'affichage (AG) résultant de tolérances de fabrication,
b) un générateur de codes (CGEN) pour générer des données clés (KD) en fonction des caractéristiques optiques détectées (IM),
c) un dispositif de cryptage (CRY) pour crypter les données d'affichage détectées (ZS) pour obtenir un message (ENC), à l'aide des données clés générées (KD), et
d) une interface de sortie (DP) pour produire le message (ENC) en sortie.

10. Ensemble selon la revendication 9, **caractérisé en ce que** l'ensemble est conçu en tant que coupole (A) pour permettre la fixation positionnable individuellement de l'ensemble (A) sur l'appareil d'affichage (AG).

11. Ensemble selon la revendication 9 ou 10, **caractérisé en ce que** l'interface de sortie (DP) comprend un écran pour afficher le message (ENC).

12. Ensemble selon l'une des revendications 9 à 11, **caractérisé en ce que** le dispositif de détection comprend une caméra (C) pour détecter les données d'affichage (ZS) ainsi que les caractéristiques optiques individuelles (IM).

13. Ensemble selon l'une des revendications 9 à 12, **caractérisé par** un dispositif d'éclairage (L) pour éclairer l'appareil d'affichage (AG).

14. Ensemble selon l'une des revendications 9 à 13, configuré pour exécuter un procédé selon l'une des revendications 1 à 8.

15. Produit de programme informatique, comprenant des commandes qui font qu'un ensemble selon la revendication 9 exécute les étapes de procédé selon l'une des revendications 1 à 8.
